# EUROPEAN PATENT SPECIFICATION

(11) **EP 3 252 207 B1**
(45) Date of publication and mention of the grant of the patent: **20.09.2023**
(21) Application number: 17180522.9
(22) Date of filing: 12.11.2008
(51) Int. Cl.: D06F 39/08, D06F 37/02, D06F 37/04, D06F 37/26, D06F 23/02, D06F 23/06, D06F 37/06, D06F 39/04, D06F 39/10

(54) **WASHING MACHINE**
WASCHMASCHINE
MACHINE À LAVER

(30) Priority: 12.11.2007 TR 200707754
(43) Date of publication of application: 06.12.2017
(62) Divisional of application: 08851033.4
(73) Proprietor: Texdreme Arastirma Gelistirme Anonim Sirketi, Kemerburgaz Eyupsultan / Istanbul (TR)
(72) Inventor: SIMSEK, Tulga, Sarryyer, Istanbul (TR)
(74) Representative: Wallinger, Michael

(56) References cited:
- WO-A-2008/079070
- WO-A1-85/03729
- DE-A1- 2 915 092
- DE-A1-102006 010 179
- DE-A1-102006 041 431
- US-A- 3 760 950
- US-A- 5 782 111
- US-A1- 2005 015 892

## Description

This invention is related to washing machines and in particular to drum type washing machines that provide saving from water, energy and time and at the same time increase washing and extraction efficiency. The machine according to this invention prevents the harm of the textile caused by the drum perforations and also during the high speed spinning stage.

This invention is also related to a washing and rinsing process realized using this machine.

Washing machines are provided with various capacities for domestic and industrial applications in order to use for various processes that enable washing and/or chemical treatment of different materials, especially textile products. Besides washing machines for domestic use, there also exist several industrial types, providing physical and chemical treatments such as washing, stone-washing, dry-cleaning, bleaching, softening, and dyeing.

Horizontal drum washing machines that constitute the object of the present application comprise a cylindrical, either horizontal or inclined with horizontal liquid tub and a perforated basket drum arranged in a same position with tub placed in it and, rotating around a shaft-bearing unit and wherein material is/are loaded. Said washing machines are divided into two groups, front loading drums wherein the drum comprises a bearing on one side only and those wherein the drum is provided with bearings on two sides.

Aforementioned drums are in general constructed from stainless steel. Perforations provided over a drum surface enable the inflow of liquid such as water, solvents, chemicals and hot water that heated outside the drum, as well as the outflow of liquid to be discharged. Centrifugal force created by the rotation of a drum at high speed to separate a certain amount of liquid absorbed by the material and drain out through drum perforations.

In order to fill the drum with liquid such as water or, to heat water, to mix chemicals into water, to measure water temperature, to measure water level, to drain water, and to collect liquid draining out through the drum perforations during a spinning cycle, a tub is needed outside the drum, and in order to prevent said drum to contact said tub while spinning, a space is necessary in between. When washing liquid required for a washing process is taken inside a tub, the amount of liquid filling the space between said tub and the drum corresponds to nearly 15-35% of necessary liquid. Liquid draining from a limited permeability drum can be restrained and flow back is maintained therein by means of a pump which has a higher flow-rate than that permeated water, enabling therefore an evacuation of the volume between the drum and the tub while at the same time an adequate amount of liquid existing inside the drum. The drum, which constitutes the object of the invention, provides considerable savings of water, energy, chemicals, and time by means of emptying said exterior space during a washing process. Saving of water and chemicals is important as far as consumption is concerned and also it is vital to decrease the amount of waste water contaminated with chemicals, thus preventing environmental pollution. During a washing process, the interaction of water and/or chemicals with washed materials inside a drum is achieved by lifting and falling movements of said materials, which obtained with the drum rotation. Conventional perforated drums contain lifter beaters which are called ribs in sizes proportional to the diameter of the drum. In washing machines using less water, rib heights vary approximately between 6 to 12 % of the diameter of the drum, while this proportion reaches 12 to 20 % in machines using more water. The size of said ribs should enable lifting a considerable amount of the laundry mass. In conventional washing machines, the number of ribs is limited to 6 or maximum 8. Washing is both a chemical and a physical process. One other important function of washing machines is to extract liquid from processed material by way of a centrifugal force produced from spinning of drum at high speeds. Due to centrifugal force, extracting pressure at high speeds may attain values up to 400-500G; and in the case of high capacity machines, wherein laundry stretches very tightly over ribs, and spaces remain underneath between the ribs and drum sheet, such physical pressure may applied to said laundry to stretch towards the spaces and causes damages or tearing. On the other hand, laundry over the ribs, placed during distribution, is closer to the rotation axis, means it undergoes less centrifugal force, and more liquid remains thereon. If material is lifted by means of many small ribs or protrusions scattered in very short intervals and homogeneously over the cylindrical surface of a drum, said drum constituting the object of the invention, any damage caused to textile by normal size ribs can be prevented. Height of said small ribs and protrusions indicated here is approximately between 1 to 6 % of the diameter of said drum.

Protrusive cylindrical surface of a drum also provides other advantages besides the facility of lifting washing material. Such protrusive structure, augments the physical effect while washing, helps to rotate the material in more homogeneous and more regular manner, enables better distribution of laundry inside the drum at the start of extraction and orients extracted water towards the perforations. During extraction phase, textile dispersed over a usual perforated cylindrical surface gets more and more squeezed as centrifugal force increases pressure thereon, which restrains not only water passage through the textile fibers, but also drainage ways through the drum perforations. Water drainage from a drum can be accelerated by employing adequately elevated and dense protrusions that are provided in the present invention, in which situation laundry will stretch towards the spaces between the protrusions but will not reach to block the perforations. Draining more extracted water at an equal spinning speed and equal time is provided and in return improved extraction efficiency without any change in the energy consumption is obtained.

Many solutions have been suggested to achieve water and energy savings in washing machines. The system described in the US Patent Application No 20070028654 is unable to provide solutions to problems such as water drainage from a drum obtained only during an extraction phase and out of one particular area, water having to pass through washed fabrics before attaining the perforations during an extraction and causing therefore insoluble particles to deposit inside said fabrics, impossibility re-heating if necessary, and the drain difficulties. Explanations recommended in the US Patent Application No 20050015892 and the US Patent Application No 20050028298 do not supply solutions to problems such as the backward slanting position of a drum, necessity to have said drum to spin at high speed for evacuation, water level inside said drum considerably altering the amount of water drained there from, limited amount of drainage out of said drum during both drain and extraction cycles, water passing through washed fabrics during drain and therefore depositing particles which should normally be carried away with water. Both systems suggested are difficult to put into practice because the amount of water that will pass through drum into the tub is exceed the capacity of pumps used in domestic washing machines in the case when material and water exceed the drum mouth level. Even the features of such a drum, neither placed horizontally nor cylindrically shaped as in standard and common drums, may create problems in practice. However, in order to apply all types of washing machines and washing operations, a drum should be designed so as to allow dry fabrics to be fully loaded therein and enabling water level to exceed the half level of the drum.

The DE 29 15 092 A1 discloses that projections are provided on the inner surface of the drum of a domestic machine which washes and centrifuges. Some at least of these projections have a height which is less than that necessary to lift the items of linen above the axis of the drum, so that these projections at least have a scrubbing action on the linen. The linen is thus subjected to a twofold washing action. The US 5782111 A discloses a rotary drum washer having an abrasive structure therein for treating fabrics or garments in a wash medium and a method of abrading fabrics or garments employing the abrasive structure to produce a controlled abrasion of the fabrics or garments. The abrasive structure is formed with a multiplicity of protrusions and abrading tumbling ribs. The DE 10 2006 010 179 A1 discloses a drum wall having a number of drop-shaped or shell-shaped bulges with a continuous curved outline and a single axis of symmetry parallel to the circumference of the drum. The bulge is towards the center of the drum and is more steeply inclined towards one edge. For wet treatments, flow passages are provided in the steep section. Alternatively, flow passages are provided between the bulges. The US 3,760,950 A discloses a centrifugal machine in which at least one inflatable lifter is provided on the inside surface of the drum or basket, means being provided for inflating the or each lifter at predetermined intervals to loosen material previously deposited on the wall of the drum or basket.

The invention disclosed in the present application provides savings from water, energy, chemicals and time consumption as attempted by the foregoing references, through limiting water use by the strictly necessary amount for the inner drum, enabling implementation in all types of perforated drums horizontal or inclined with the horizontal, independent from water level or the amount of fabrics loaded therein. Moreover, as explained below in several layouts, the application of methods, corresponding to the purpose of the present invention, has been reduced to such basic essentials that no alteration is required in the production techniques of conventional and commonly used horizontal washing machines. Providing the cylindrical surface of a drum with perforations as in ordinary drums, and enabling water drainage through said perforations during both drain and extraction cycles prevent not only efficiency loss in washing and extraction but also the creation of new problems.

The problem of the present invention is solved by a washing machine according to the independent claim 1. The dependent claims refer to further advantageous developments of the present invention.

Preferably, said circulation line is accessing into said drum through a door or a drum-tub mouth bellow or a drum shaft.

Preferably, chemicals are added to the washing liquid before the circulation line and before the pump is operated; tub liquid is heated be means of steam injector or a heat exchanger on the circulation line and the particulates in the circulation liquid are filtered through a filter.

Preferably, in order to restrain the permeability of said drum, perforated surfaces of said drum are coated with a permanent or detachable material to limit water flow and that shapes, quantities and sizes of said coating perforations are provided in a way to provide the drain rate of the liquid from said perforations is less than the flow rate of the pump which is used to pump the liquid back into the drum.

Preferably, said coating is manufactured of various material like rubber, plastic, metal, woven or any other material having limited liquid permeability due to its porous structure, and preferably wherein said rubber, plastic or similar surface coating comprises bulgy parts of various shapes and sizes in between said perforations, and/or wherein small slits corresponding to drum perforations, without leaving any space there between are provided on the said rubber or plastic coating.

Preferably, in order to restrict liquid permeability of said drum the passage around the drum mouth to the tub is covered with a suitable sealing gasket.

Preferably, said gasket is mounted onto the drum mouth to rotate with said drum, and by touching either specific surface of the tub or the tub door or a suitable surface in order to restrain the liquid passage way and if desired said gasket is provided with a weight protrusion to decrease or totally eliminate pressure caused by centrifugal force exerted during extraction.

Preferably, said protrusions are provided on the cylindrical surface of said drum either solely in lieu of normal size ribs or in addition to conventional normal size ribs.

Preferably, said protrusions are arranged over the entire interior surface of said drum in the form of small ribs, and preferably wherein said small size ribs are placed onto the said drum surface with an angle with rotation axis or in helical form to move laundry in the same direction of rotation axis, either from back to front or reverse, during drum rotation, and/or wherein said small size ribs are placed over the surface of said drum to completely cover the drum perforations however to allow the flow of liquid underneath gap to reach the drum perforations, and/or wherein said protrusions are regionally elevated in various heights to form nonhomogeneous surface shape that helps to lift up the material up.

Preferably, the drum perforations provided on the cylindrical surface of said drum are arranged in the hollows between said protrusions, and preferably wherein drum perforations are sized so as to allow the large dirt pieces or pellets leave the drum and/or wherein drum perforations are sized small enough to reduce liquid permeability of the drum.

Preferably, the parts used over the perforated surface of said drum are configured to constitute a profile including protrusions and also the hollow zone, said profile covering drum perforations as well; and bores in the hollow zone matching with drum perforations, in less numbers and/or smaller in diameters than perforations of conventional drums for reducing liquid permeability of the drum.

### BRIEF EXPLANATION OF THE FIGURES

The invention shall be explained in detail here below with references to the attached figures, where:
**FIGURE-1** represents a perspective sectional view of a washing machine showing drum perforations in reduced size (B) and with drum mouth covered (A).
**FIGURE-2** represents a perspective sectional view of a washing machine showing drum perforations covered with a fabric (A) and with sheeting (B) that comprises perforations smaller than drum perforations (B).
**FIGURE-3** represents a perspective sectional view of drum perforations coated with sheeting that comprises slits thereon.
**FIGURE-4** represents a perspective sectional view of drum perforations covered with sheeting that comprises perforations smaller than drum perforations, surface of said sheeting shaped in a bulging curve so as to facilitate water drainage from said drum.
**FIGURE-5** represents a perspective sectional view of numerous lifter ribs dispersed over a drum surface and a water tank arranged inside a tub.
**FIGURE-6** represents a perspective view of a perforated metal sheet that partly covers the perforated cylindrical surface of a drum, said metal sheet which is reduced in size through coating with rubber or plastic material.
**FIGURE-7** represents a perspective view of the perforated cylindrical surface of a drum coated with a material comprising protrusions.
**FIGURE-8** represents a perspective view of different protrusive materials used in coating the perforated cylindrical surface of a drum.
**FIGURE-9** represents a perspective view of various protrusive materials that are applied in pieces and assembled onto the perforated cylindrical surface of a drum and of the assemblage of said pieces.
**FIGURE-10** represents a perspective view showing the impact on laundry of a protrusive coating on the perforated cylindrical surface of a drum during extraction.
**FIGURE-11** represents a perspective view of a drum, wherein a metal sheet is given a protrusive configuration by undulating (A) or by shaping a plastic material in a mould (B), to match said metal sheet perforations with the bored zones thereof.
**FIGURE-12** represents a perspective view of the perforated cylindrical surface of a large industrial drum provided with a protrusive configuration through the addition of metal, rubber or plastic pieces.
**FIGURE-13** represents a perspective view of the cross section of two protrusions hiding the drum perforations underneath.

**List of component numbers used in the description**

| | | | |
|---|---|---|---|
| 1 | Washing machine | 32-b | Small conical plastic pieces |
| 5 | Drum | 32-c | Small ribs |
| 8 | Large drum perforations | 32-d | Small stainless ribs |
| 9 | Perforated drum surface | 33-a | Corrugated stainless surface |
| 10 | Water tub | 33-b | Corrugated plastic surface |
| 11 | Shaft-bearing | 34 | Sealing gasket |
| 12 | Drum mouth bellow | 35 | Door glass |
| 13 | Door | 36 | Weight protrusion on a sealing gasket |
| 14 | Drum mouth | 37 | Drum-tub water passage space |
| 15 | Drain | 38 | Return to drum |
| 16 | Circulation pump | 38-b | Spray nozzle |
| 17 | Drain pump | 39 | Heating volume |
| 18 | Filter | 40 | Circulation line |
| 19 | Metal sheet coated with plastic-rubber | 41 | Electrical heater |
| 20-a | Small perforations over front-rear cover | 42 | Perforation on a plastic-rubber sheet |
| 20-b | Small perforations over drum cylindrical surface | 43 | Evacuation |
| 21 | Perforations reduced in size | 44 | Water storage tank |
| 22-a | Flat sheeting with small perforations | 45-a | Rib shaped protrusions |
| 22-b | Fabric or pores material | 45-b | Pyramidal protrusions |
| 22-c | Sheeting with slits | 45-c | Conical protrusions |
| 22-d | Bulging sheeting with small perforations | 45-d | Sheet protrusions |
| 23 | Slits | 45-e | Profiled protrusions |
| 24 | Drum locker perforations | 45-f | Individual conical protrusions |
| 25 | Conical locker | 45-g,h | Shaped drum protrusions |
| 26 | Perforated bulging locker | 45-i,j | Ribs added to the drum surface |
| 27 | Bulging protrusions | 45-k | Protrusions having water flow gaps underneath |
| 28 | Bores of a bulge | 46 | Bores |
| 29 | Plastic-rubber coating | 47-a | Front drum cover |
| 30 | Coating width on perforated metal sheet | 47-b | Rear drum cover |
| 31-a | Rib shaped sheeting with small perforations | 48 | Processed material |
| 31-b | Protrusive sheeting with small perforations | 49 | Perforated plastic |
| 31-c | Conically protrusive sheeting with small perforations | 50 | Usual normal size rib |
| 31-d | Protrusive sheet with small perforations | 51 | Small protrusive plastic pieces |
| 32-a | Plastic pieces with small perforations | 52 | Water flow passage beneath the protrusions |

### BRIEF DESCRIPTION OF THE INVENTION

In below descriptions the term "water" is to be understood to cover "liquids and chemical solvents" using in any kind of washing and dry-cleaning machines.

The object of the present invention is to provide a drum washing machine that enables;
- during wet or dry washing processes through the use of a pump that evacuates the water in the space between a drum and a tub by pumping water from tub into the drum, said drum with reduced water permeability and said pump flow-rate capacity of which is higher than that of drained water from the drum to maintain said drum constantly with adequate water level, therefore limiting total water usage in the machine with the required amount of water within the drum, results savings from water to fill the space between the drum and the tub and the empty space of ribs and the balance cells, as well as savings in energy consumption that is required to heat such amount of water and to rotate the drum,
- to enable same material/water ratio to use water for any loading quantity independently from machine capacities to be able to use the machine for loads smaller than usual capacities under same economic conditions.
- to prevent drum perforations damaging delicate textile by means of coating said perforations with a woven fabric,
- to prevent textile being harmed during washing and especially during high speed spinning by a few number of elevated ribs that are applied in large drums, by means of substituting several low and small ribs or protrusions in various shapes for lifting said material,
- to increase physical effect on washed material and to increase water passage through perforation during extraction either through providing the interior surface of a drum with protrusive construction or coating with protrusive material or through attaching pieces so as to obtain protrusions over the perforated surface of said drum,
- to maintain a more homogeneous and balanced distribution of laundry over a cylindrical perforated drum surface during extraction by means of small ribs or protrusions dispersed homogenously thereon and uplifting said material while said drum rotates,
- to prevent damaging of delicate textile during washing by means of permeating the water through said textile while rotating same speed with drum which are spread over several small ribs or protrusions that are provided on the perforated surface during spinning of approximately at distribution speed.
- to increase rubbing effect during a washing by using of storage volume provided in said tub wherein to accumulate water by reducing water level in said drum by means of pausing pump circulation intermittently so augmenting friction between the fabrics and between said fabrics with drum protrusions.
- to provide draining big dirt pieces or dirt pellets especially occurred during washing of materials such as carpet, door/dust mat or mop; through drum perforations, by means of adequate size big holes placed between said protrusions that prevent damages on said materials by said holes.

Water passes through drum perforations and also through drum mouth in front-loading drum washing machines. In a drum of the present invention, water flow through the perforation and drum entrance mouth is restrained in various techniques. Water with limited flow rate draining from said drum into a tub is sucked from underneath the tub by a pump, flow capacity of which is higher than the flow rate of draining water, and flow back into said drum by any way such as from the door or through the interior of the drum shaft or by way of an elastic mouth bellow situated between the tub and the drum, thus enabling a complete evacuation of the water in the space between said drum and said tub even when the drum is full with adequate water for washing. In conventionally designed drums, water passage from a drum is limited by way of reducing the diameter and/or diminishing the number of perforations or by lining with a material which has limited permeability onto the perforated drum surfaces. Said sheeting can be produced from metal, plastic, rubber or a similar substance, or a fabric or a material which although has a homogeneous structure that enables a certain amount of water oozing through its structural pores. The present invention enables to make savings from water, where conventional washing machines fill the volume between a drum and a tub, providing also savings from energy consumption to heat said water and from time to heat such water. Also, since during a washing cycle, there is no water contained inside the external tub, transmission of conduction heat loss from outer surface of the tub decreases. Absence of water outside the drum during washing results energy savings that consumed is in order to rotate the drum. Besides, reducing environmental pollution is another benefit, as savings of water lessens the amount of wastewater contaminated with chemicals.

Various techniques can be employed to provide a protrusive configuration on the surface of perforated sheeting to coat the perforated surface of a drum. There is also the possibility of covering the cylindrical surface of a drum with a lot of pieces made of metal, plastic or rubber by assembling said pieces, so as to provide said surface with a protrusive shape. A configuration which is applied onto a drum surface so as to form a bulge thereon which facilitates water drainage through drum perforations while spinning, a protrusive configuration with protrusions in adequate heights and forms, will also augment physical impact effect on the laundry and provide rubbing effect during a washing cycle. Using small protrusions instead of normal size ribs causes higher drum rotation per same time during washing in order to rotate washing material on the same moving route. More rotation per same time means more physical effect and increase in washing efficiency. Stone washing provides special worn out process on denim fabric products. During stone washing, abrasive material used for said stone effect also abrades drum surfaces. Removable plastic protrusions protect perforated drum surface from said abrasive effect, increase physical friction and rubbing effects thus provide better and more homogeneous washing.

Extraction process begins by distribution; fabrics which spin together with the drum stuck thereon spread onto the protrusions over the surface; as centrifuge force rises, fabrics stretch towards the space in between the protrusions and cause the fibers draw apart, which facilitates the water flow through. Lifted up by said protrusions, fabrics do not block perforations and water extracted from said fabrics can easily reach to said perforations. To prevent damaging of delicate textile during washing, protrusions in smaller size have to be applied. In this case, said protrusions can be made of elastic material. Protrusive pieces may also be used to hide drum perforations completely.

Since protrusions in various shapes and sizes dispersed along the entire surface effectuate a lifting function while washing, utilization of additional normal size ribs that are used in conventional machines, becomes unnecessary. In this layout, either by applying the lower sized ribs or the absence of normal size ribs in the drum also resolves the laundry damaging problems which arise due to the height of ribs during high speed extraction. By using small size ribs instead of normal usual size ribs, fabrics inside the drum are more homogeneously distributed during washing and extraction processes. Common type high ribs can also be used together with small protrusions helping to rotate material. If said protrusions are in the shape of small sized ribs distributed whole drum surface and placed with an angle to the rotation axis or helically shaped they help to move laundry also to same direction with rotation axis, either from back to front or reverse. Said continuous position changing constitutes more homogenous washing process. Several protrusions of various heights as a non-homogenous surface may be used along with small protrusions to facilitate the moving of the material with the drum.

Water in the drum exerts a buffer function between washed materials and reduces the rubbing effect thereof. Washing efficiency can be increased by decreasing water amount, which augments friction and removes dirt from said materials; then increasing water level again, allows to remove dirt by mixing with water. Rubbing the fabrics during a washing process can be repeated several times by increasing and decreasing water amount. If the amount of water is to be decreased, the pump circulating water from the tub into the drum is paused, letting water to store inside the tub or a tank installed either within or outside the tub. When the pump starts running, the drum is refilled with water from the tank. For present invention volume of the space between drum and tub is not important anymore because said volume does not keep water anymore.

In order to control water drainage, the perforated surface of a cylindrical drum can also be coated with an adequate fabric. Another purpose of coating a perforated drum surface with fabric is to form a screen over the perforations to prevent any damage to delicate fabrics which may caused by burrs present inside the holes or the cutting edges thereof.

### DETAILED DESCRIPTION OF THE INVENTION

A drum type wet or dry washing machine (1), wherein the characteristics that constitute the object of the present invention are implemented, comprises a perforated drum (5) inside a cylindrical tub (10), as illustrated in Figure-1, which is suitable for front loading and to rotate horizontally or inclined to the rotation axis by means of a shaft-bearing (11) provided on one side in the back or on both sides. In industrial or domestic front-loading washing machines, drum entrance mouth (14) is shut by a door (13), either directly connected to the tub (10), or connected to an outer chassis independent from the tub (10), where an elastic bellow (12) is provided to maintain an integrity with the tub (10) and drum to keep water in the tub. In drums with bearings on both sides, door is provided both in the drum and in the tub in industrial machines. In spite of some differences in size and details, principal components of domestic front-loading machines are similar with industrial washing and dry-cleaning machines. To simplify figures and descriptions, front-loading domestic washers (1) are used in the present application. Layouts illustrated and described below through domestic type washers can be implemented in all industrial washing machines, both in those with single side bearing and with both sides bearing. In a washing machine (1) which is object of the invention, in order to prevent keeping any unnecessary water inside the tub, drained water from the drum (5) to the tub (10) is pumped back to the drum (5) during all wet processes by means of a pump (16) while required amount or level of water exists inside the said drum (5) for a particular process. The fulfillment of this condition is possible either by way of providing a pump (16) big enough to pump more water than water drained out from the drum or by implementing various methods to reduce water drainage from the drum so as to correspond to the capacity of the pump employed. If a selected pump (16) has a flow-rate more than water drain-rate from the drum (5), then said pump can evacuate the space (39) between the drum and the tub (10). However, considering the number of drum (5) perforations (8) and diameters of a conventional washer, pump (16) that can handle the drained water flows from drum must be oversized for practical use. Water drainage has to be restricted from the drum during wet processes so a pump (16) can be able to pump back the drained water from the drum (5). Water permeability of a drum (5) can be restrained by means of several methods. Selected method depends on the intended use of the washing machine. Same pump (16) can be used for circulation and evacuation (43); however, if a pump is employed solely for circulation purposes, then a separate pump (17) can be used for evacuation purposes.

The basic method of controlling drum (5) impermeability consists of diminishing permeability of drum perforations (8). If it is a perforated conventional drum, the number and/or diameter of the perforations (8) on the drum (5) have to be reduced. In order to realize the differences between standard perforations and reduced perforations in numbers and sizes are illustrated in Figure-1, wherein Figure-1C shows standard perforations (8) and Figure-1B reduced perforations (20-b). Considering the thickness of stainless metal sheet (9) of a drum (5) which has to be resist the high pressures during extraction, it is tough and uneconomical to punch the small sized perforations (20-b). Small perforations (20-a) can also be placed onto the front (47-a) and/or back (47-b) cover surfaces of drum (5). Apart from reducing the size of perforations (8) on the metal surface (9) of a drum (5), different methods described below can be implemented to restrain water permeability from a drum. The perforated cylindrical surface (9) of a drum (5) can be coated by sheeting (22-a) produced from an adequate material comprised from smaller perforations (21) as illustrated in Figure-2B. Said sheeting (22-a), shown to disclose drum perforations (8) has cut from line (C), can be manufactured from a hard material such as thin stainless metal sheet or a semi rigid material such as plastic or a soft material such as rubber. Coating can be applied directly onto a drum metal sheet (9) permanently or detachably. A coating sheet (22-a) made out of rubber or a plastic material comprises small perforations (21) matching the drum perforations (8). In methods wherein water permeability from a drum (5) is limited by way of small perforations (21), water drainage is continuous and the flow speed thereof may increase under the increased pressure during spinning. Figure-3 reveals that when coating sheet (22-c) is manufactured from an elastic material like rubber, holes of passageways do not necessarily constitute a gap. Perforations can be in the form of slits like "+" as shown on the sample in Figure-3 or may constitute slits (23) in various other forms. Slits (23) prevent water drainage up to a certain pressure level depending on the size thereof depending on the characteristics and thickness of used elastic material; but these slits start opening under the pressure during extraction, letting water drain out of the drum. Such elastic material (22-c) can be fixed directly onto the surface (9) or applied thereon (9) detachably. As shown in detail in Figure-3-A, the back side of the coating sheet is provided with conical protrusions (25). A coating sheet which is mounted by way of said conical protrusions (25) that locked when inserted inside perforations (24) of a drum, can be dismounted from the surface (9) thereon (5) and can be converted into a conventional washer drum (5) or can be altered with different surface coatings (22) as per the scope of application. During evacuation cycle of a cleaning-aimed washing process, water must drain out from the drum (5) through the perforations thereon in order to remove particles, at least partly, which do not dissolve in water. The specific embossed coating sheet (22-d), manufactured from a material such as rubber or plastic shown in Figure-4, that has a fastener system (26) to fix it onto the perforated drum surface from holes which not only well fits to the drum perforations (8) but also have passages through and facilitates drainage from a drum during extraction because of the inclined surface around the small perforations (21) placed on bottom of the hollow (28) between bulging protrusions (27). Bulges (27) may be provided in many different shapes and sizes. For an example, Figure-4 illustrates a coating (22-d) with pyramidal protrusions (27). Another method for reducing drum perforations (8) is disclosed in Figure-6, wherein a perforated metal sheet (19) is directly and entirely coated with rubber or plastic material (29), constituting a thickness (30) that reduces (42) the size of large perforations of a metal sheet (8-b). Perforations, reduced in size (42) through coating of the metal sheet (19) can be mounted onto the perforated sheet (9) of a drum. The surface of the material (29) used in coating said metal sheet (19) can be shaped like the coating disclosed in Figure-4 (22-d) with different shaped and sized bulging protrusions (27).

Another benefit of coating a perforated metal sheet (9 or 19) with a material (29) such as plastic or rubber is the prevention of damages that caused by perforations (8) to delicate laundry. Since the edges of perforations (42) of plastic or rubber material (29) cannot be as sharp as those of stainless metal sheet, laundry will not be damaged during rubbing.

One other method to achieve restrained water drainage from the drum (5) is applying a coating onto a perforated surface (9) with sheeting made by a lasting textile or compressed fibers or sheeting out of a porous rubber or plastic material or some similar substance (22-b), as illustrated in Figure-2A. A textile can be employed for this purpose, said textile densely woven with a synthetic fiber to enable the required amount of water drainage. There is also the possibility of employing sheeting (22-b) constituted with fibers fixated together in a way that permits a limited amount of water to pass through or sheeting (22-b) with some spongeous plastic or rubber that enables limited drainage through the pores therein. In conventional drums during a washing process, fine and delicate textile worn out through perforation (8) edges, even penetrating inside, and can be damaged by the sharp edges of said perforations (8) or by the burrs formed therein. Another advantage of coating the surface with a textile (22-b) or with some other water permeable substance is to prevent the drum perforations (8) to damage laundry by way of stopping all contacts between said perforations (8) and said textile.

When water drains out from a drum (5) just through a textile or water permeable material sheeting (22-b), particles that should be removed together with water may remain inside because said sheeting (22-b) functions like a filter that permits the flow of water only. This problem can be resolved through providing the drum (5), in addition to a water permeable textile coating (22-b), drum front (47-a) and/or back (47-b) cover surfaces are provided with small perforations (20-a), then particles suspended in water can be discharged from the drum (5) during all of the wet cycles; therefore, during extraction, particles do not cause a trouble when water pass through the textile (22-b) or through the fissured elastic coating (22-c) or through any other water permeable substance (22-b) covering the cylindrical surface (9). Selecting a method may vary by use purpose of a washing machine (1), and in some cases different methods can be combined in the same drum (5).

A second passage from the drum towards the tub is through the drum mouth (14). As demonstrated in the detail frame (Figure-1-A), there is a space between the immovable tub (10) and the rotary drum (5), wherein water can flow without obstruction. Water drainage through said opening (37) also needs to be reduced however it is not necessary to obstruct completely. Figure-1-A illustrates a method wherein a gasket (34) is mounted over a drum mouth (14) in order to restrain water drainage at low speed rotations of the drum by way of exerting pressure onto the door (13) glass (35) or onto an adequate surface over the tub neck by the pressure of water and laundry onto the gasket. During extraction, centrifugal force increasing firstly lessens the exert of pressure force applied by gasket onto glass (35) or surface, later on separates the gasket (34) and surface (35) completely from each other by effect of high spinning rotation speed on gasket and weight protrusion (36). Fan air flow occurred by the rotation of the drum (5) helps this separation. This prevents said gasket (34) from any damage due to friction at high peripheral speeds. Besides this particular method given as example, various other known passage diminishing methods can also be employed to restrict water drainage, depending on door and drum types.

As illustrated in Figure-1, a restrained amount of water draining from the drum (5) into the tub (10) is pumped from an outlet (15) beneath of said tub and returned to the drum (38) by means of a pump (16). Said pump (16) functioning by the principle of low pressure-high flow-rate, the amount of water inside a tub (10) either can be maintained at a desired minimum level or can be completely evacuated through the selection of a pump (16) that possesses a flow-rate higher than the rate of drained water out from a drum (5). In order to keep water amount at desired level, pump (16) flow-rate can be regulated either by running the pump in an on-off manner operated by water level monitoring system or by changing motor speed of the pump through an inverter unit. For heating water, volume (39) beneath the tub wherein an electrical heater (41) or a steam jet is provided, should be filled with water throughout heating cycles. Outside these cycles while washing and rinsing, all water has to be in the drum (5) except the necessary amount which allows proper functioning of the pump (16). Installing a steam injection or electrical heat resistance or any kind of heat exchangers on the circulation system is another way to heat water. If requested, a filter (18) can be provided over the circulation line (40) to separate unsolved particles in the liquid. Adding the chemicals to the washing liquid before the circulation line (40) and the pump (16) provides a more homogeneous mixture. Heating up the tub liquid via steam injection to the circulation line (40) or through a heat exchanger provided on the circulation line eliminates the need for an extra heating apparatus and volume.

A spray nozzle (38-b) arranged on the circulation line (40) at the drum inlet, as shown in Figure-5, can regulate the route the incoming water, spraying water onto laundry (48) during washing, and augments washing and rinsing efficiency. The circulation pump (16) is stopped at the end of wet processes, and water is evacuated either through the evacuation line (43), or using a separate evacuation pump (17) upon request. In domestic type washing machines, a pump (16) used for circulation purposes can also be employed for evacuation purposes. For this purpose, a valve system mounted at the pump (16) outlet is used to direct water towards the drum (5) or the evacuation line (43). Both pumps (16 and 17) can be employed simultaneously for circulation purposes.

As water amount is reduced inside a drum (5) during wet processes like washing and rinsing, physical friction increases between washed materials (48), providing a better rubbing thereof. To enable this, a volume (44) inside the tub (10) as shown in Figure-5 or outside the tub, can be used to store drum water. During washing, the pump (16) is stopped and most of the water inside the drum (5) is stored to the said volume (44). Thus, as water is stored inside the tank, drum (5) water is lessened and rubbing effect augments. Water in the tank (44) can be pumped back into the drum (5) by re-operating the pump (44) to remove dirt from laundry. Repeating this process at intervals will increase physical wash efficiency.

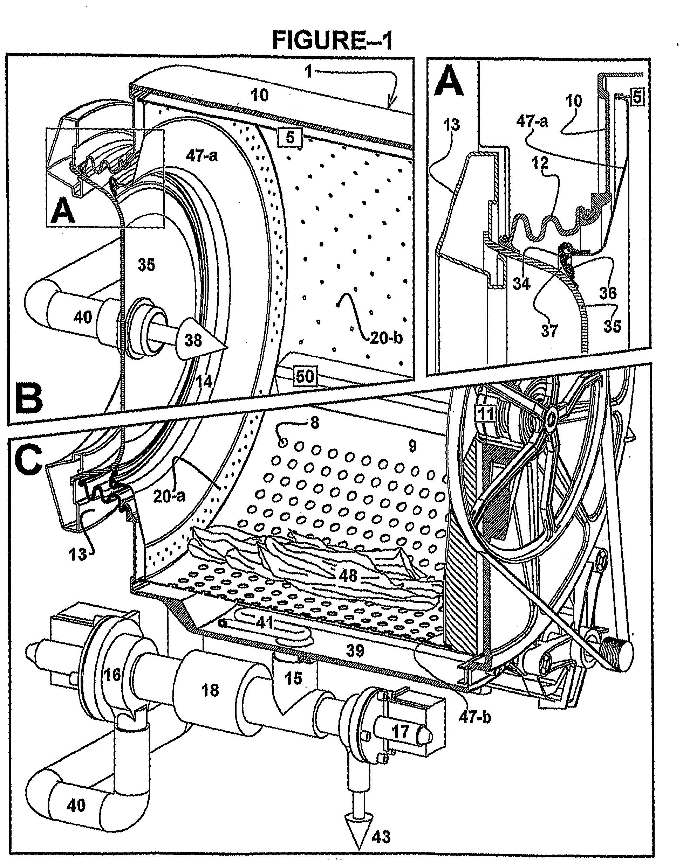

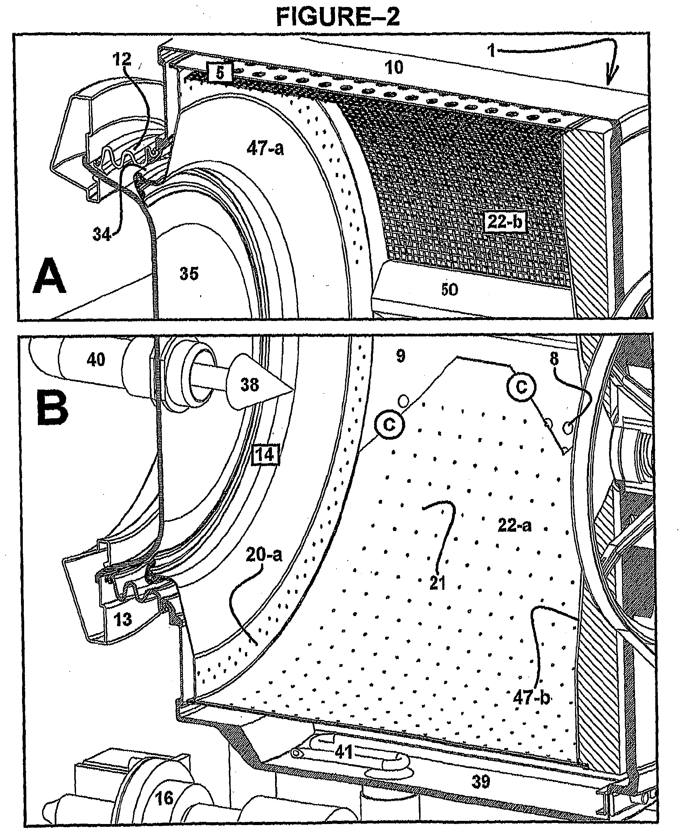

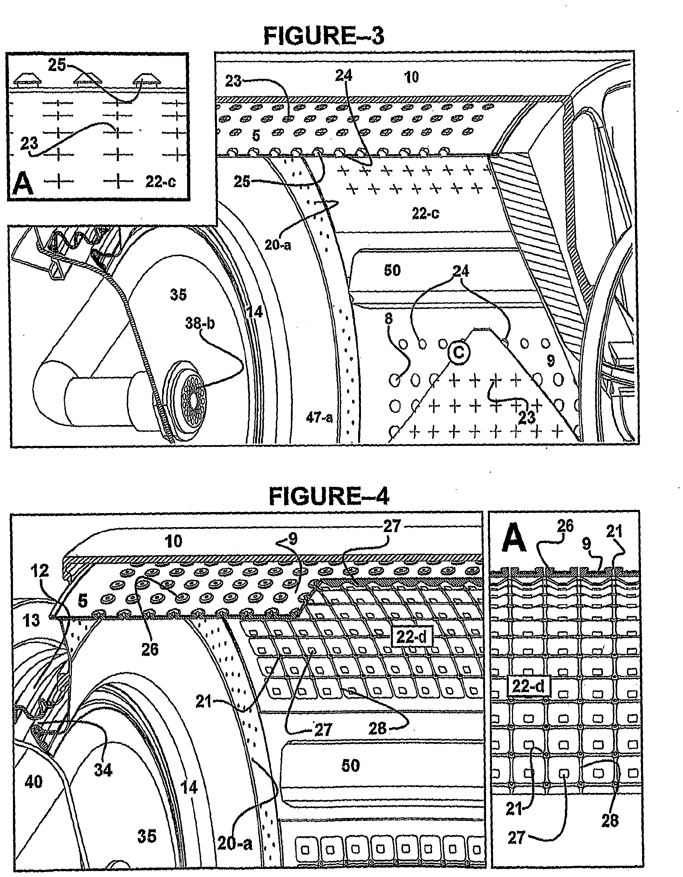

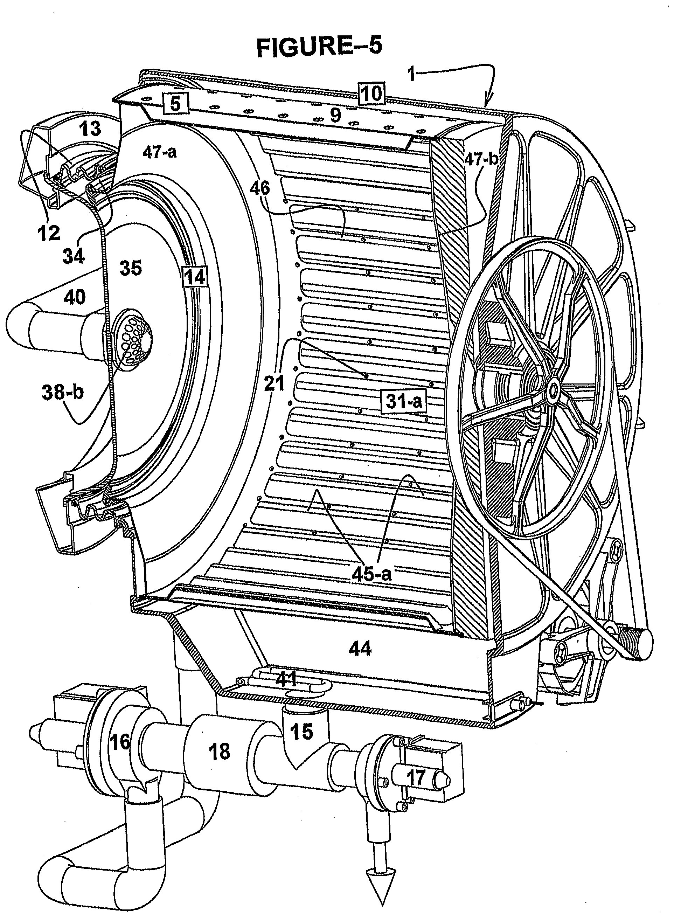

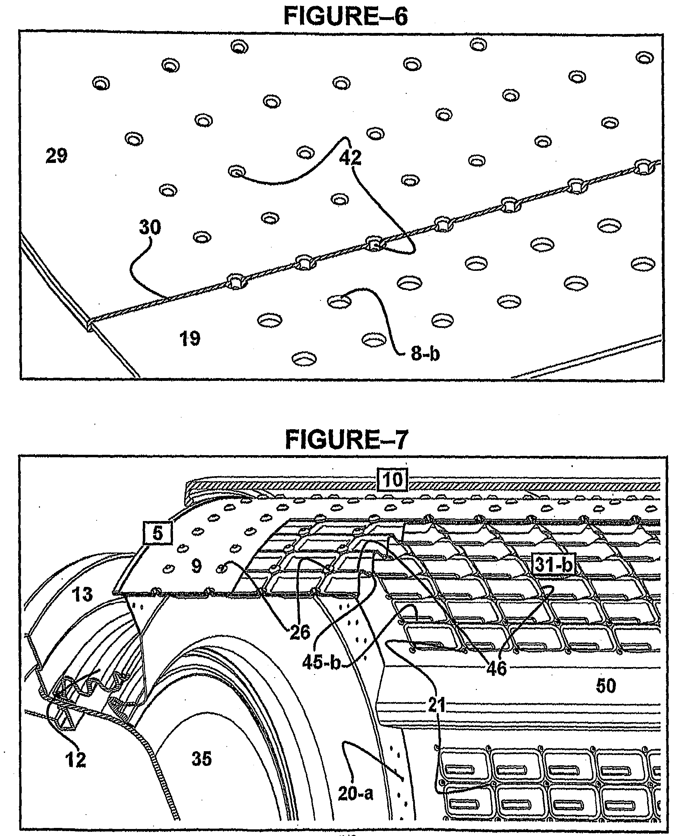

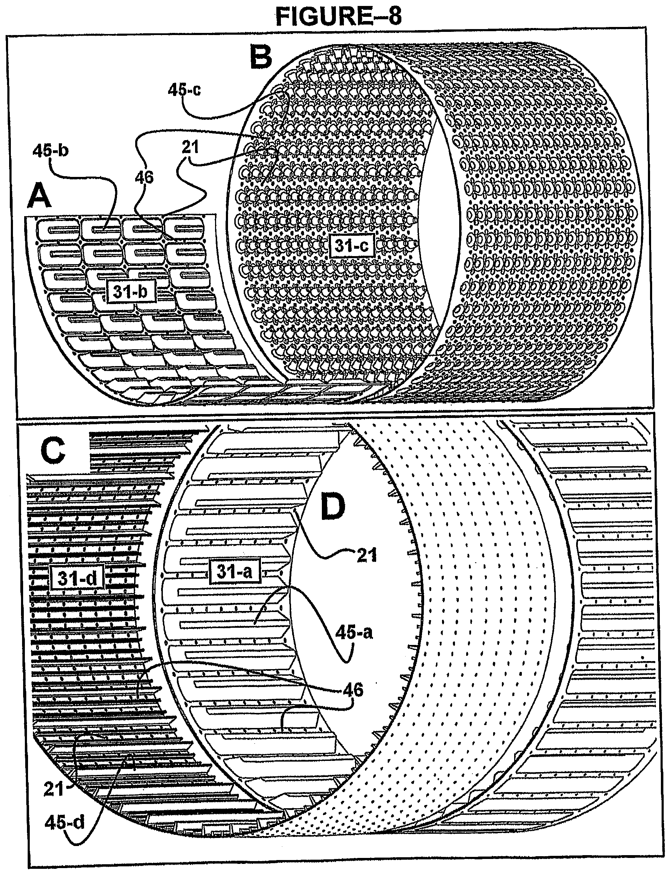

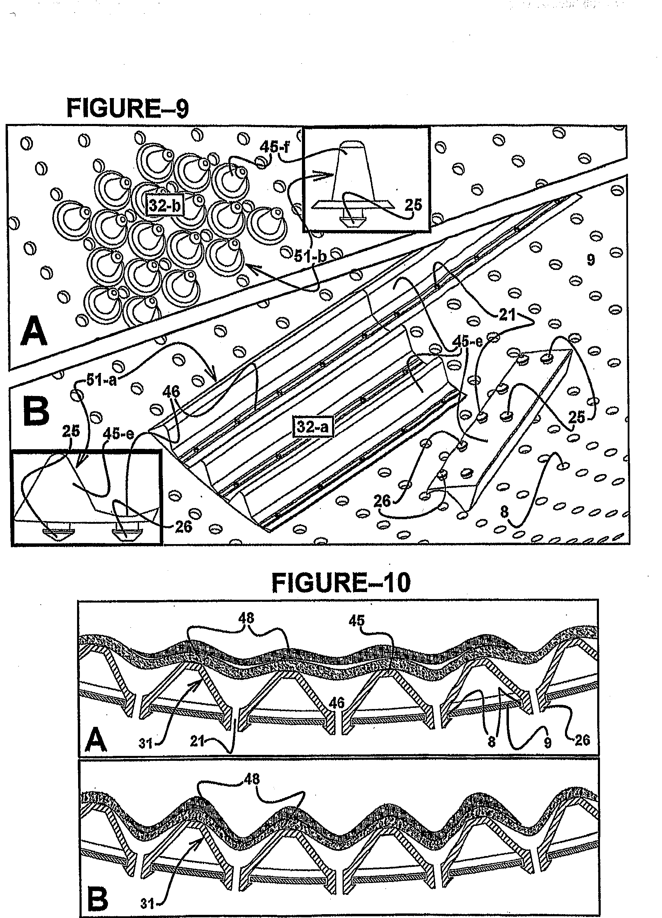

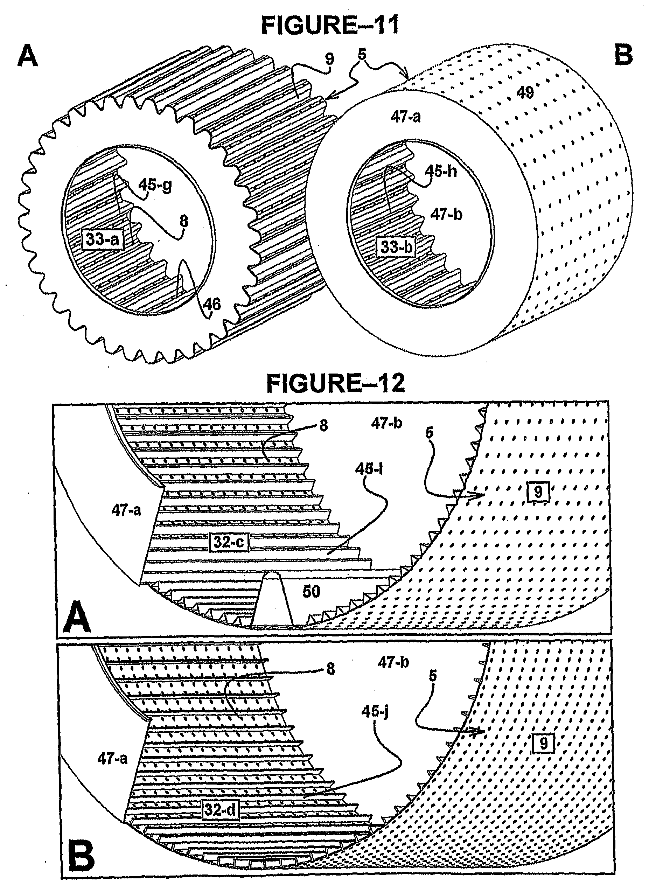

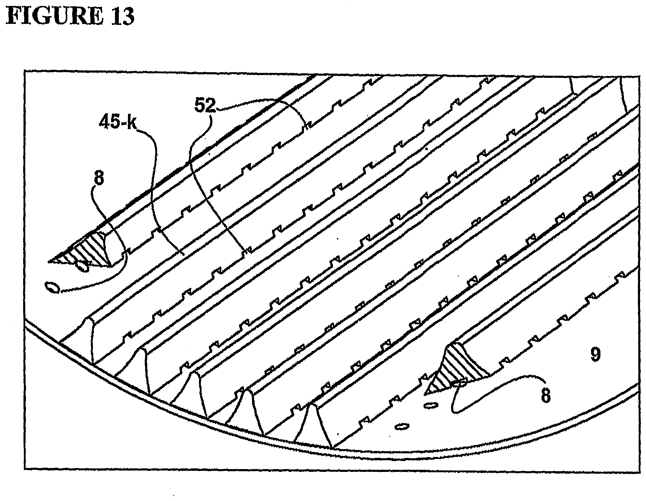

As illustrated in Figure-7, coating of the cylindrical surface (9) of a drum (5) with plastic, rubber or similar substance (31-b), augments physical effects in washing cycles and also extraction efficiency, said coating comprises from a perforated (21) surface with distinctly protrusions (45-b) in different shapes and sizes. In the layout shown in Figure-7, a coating sheet (31-b) applied onto the perforated surface (9) of a drum (5) for shaping purposes, restrains at the same time water drainage as conical lockers (26), which are fixed through the drum perforations in order to lock said material (31-b) onto the surface (9), comprise perforations (21) in the middle which are smaller than drum perforations (8). Coating sheet (31-b) shown in Figure 7 is applied onto a drum surface (9) in a demountable manner but can also be fixed permanently. There is also the possibility of coating a perforated drum surface (9) with a substance produced by several flexible pieces (Figure-8A) that can be assembled together to constitute a cylinder or in one single piece (Figure-8B,C,D) that can be shaped as a cylinder for mounting onto said drum (5). By providing in adequate size, shape, and quantity of protrusions (45) which cover the cylindrical surface (9) of a drum (5) can rotate and lift up the laundry (48) inside said drum without necessitating the use of normal size lifter ribs (50), which are currently employed in horizontal washing machines. Such drum surface will have the configuration as disclosed in Figure-5, wherein there is a large number of ribs or protrusions (45-a) but shorter and smaller size than conventional ribs (50). These small-sized ribs can be applied onto a drum surface in the form of a coating sheet (31-a) or mounted thereon separately (32) or in groups. The number of ribs (50) is generally 3 to 4 in conventional washing machines, sometimes 6 or maximum 8 in large-capacity ordinary industrial machines, whereas in the embodiment of this invention, small ribs (45-a) or similar protrusions (45-b, c, d) which substitute beaters (50) of conventional washing machines, are much greater in numbers. While the height of a rib (50) employed in a conventional drum (5) corresponds to at least approximately 6% of said drum diameter, the height (45) of a protrusion cited in the present invention corresponds to maximum approximately 6% thereof. Said protrusions are higher than the smooth protrusions functioning to form bulge surface which some of the producers applied on their drums using together with normal ribs. Besides, as can be seen in Figure-5 and Figure-8-D, these protrusions (45) are not necessarily shaped as conventional ribs (50). Said protrusions may come into various shapes (45-b, d) and sizes, as illustrated in Figure-8-A, C. Furthermore, said protrusions (45-c) can be configured completely different from conventional and can be numerous (31-c) as illustrated in Figure-8-B. Drum surface shapes can be implemented either as demonstrated in Figure-8 through shaping the coating that covers the perforated cylindrical surface (9) of a drum (5) or by way of mounting pieces (51), as in Figure-9, through various methods directly onto the perforated cylindrical surface (9) of said drum (5) to form similar view as shown in Figure-8. Providing protrusions (45) from small pieces (51) can be a more convenient solution particularly in industrial type washing machines wherein a drum is too large to be covered with a single-piece coating material (31). Installation of protrusive pieces (51) produced from a material like plastic or rubber, is achieved by inserting said pieces inside the perforations (8) over the perforated metal sheet (9) of a drum (5) and locking by imperforated (25) and/or perforated (26) conical protrusions, as illustrated in two different layouts in Figure-9, or completely different installation method used for mounting of said pieces. Protrusive shaped profile (51-a) pieces those completing each other by gathering when they mounted over the drum sheet as shown in Figure-9-B, enables shaping (32-a) of the interior of a drum (5) with protrusions (45-e) and also covering large drum (5) perforations (8) with smaller perforations (21). When necessary, protrusions (45-e) can be altered as shape, density, plurality, size and also number and diameter of its perforations (21), just by changing the pieces (51-a). Pieces (51) installed inside a drum (5) may be in various shapes and sizes. Figure-9-A illustrates an layout wherein conical protrusions (45-f) are mounted separately (51-b). If said pieces (51-b) are fixed directly onto the perforations (8), the drum (5) will have an appearance (32-b) as disclosed in Figure 8-B. Another advantage of using small pieces (51) is that these pieces (51) can be replaced when worn out or broken over in time. Restraining water drainage and shaping drum surface (32-b) can both be accomplished at the same time if protrusions (51-b) are fixed onto a drum surface one by one as shown in Figure-9-A after applying thereon a perforated surface coating (22-a) as illustrated in Figure 2-B, said coating which reduces the size of perforations over said drum surface. Protrusive drums (5) which are not equipped with normal size ribs (50) perform better distribution (48), thus provide better washing effect and reduce load impacts on the motor during washing. The coating (31) shown as sectional schematic view in Figure-10 can be manufactured of a rigid or an elastic material at desired thickness. Said coating can be fixed permanently onto a drum metal sheet (9) or attached thereto (9) through the perforations (8) by means of inserted locking method (26). As shown in Figure 13, drum perforations are seen from the cross section of the protrusive parts (45 -g) and those protrusive parts (45-g) are placed so as to cover the drum perforations; a passage (52) located underneath the protrusive parts and corresponding to the drum perforations provides a passage of water coming from the drum to the drum perforations. Hiding the perforations underneath the protrusions prevents the contact of a delicate material to the drum perforations.

At the end of distribution, textile (48) settles on top of protrusions (45) as shown in Figure-10-A and starts stretching towards the hollows (46), under the pressure of increasing centrifugal force by increasing extraction speed. Such stretching enables water to squeeze out from in-between thread fibers, clears the way for water passage, and facilitates water to pass through said fabrics before attaining the perforations. Whereas, in conventional washing machines, during extraction, centrifugal force increases as drum rotation speed increase, that causes proportional compression on textile placed over a drum surface (9) and said textile blocks both water passage through textile and drum perforations that are obstructed by textile (8). Supplying protrusions (45) at adequate height and density will keep laundry away from perforations (21) by spreading over protrusions during washing and extraction cycles. Water will easily reach the perforations (21) and drain out from the drum (5) because fabrics (48) will not be able to block said perforations. In such drums, as demonstrated in Figure-5, perforations (21) may be fewer in numbers but larger in diameters. In case of an appropriate construction of protrusions and canals in between, there is no necessity of placing perforations on a cylindrical surface, placing of these perforations (20-a) onto the front and/or back cover sheet (47) of a drum as in the same level with cylindrical surface by corresponding to said canals would be sufficient to let water to drain out. Since, during extraction, removed water from laundry, finds its way to the perforations without facing any obstruction in the hollows (46) between the protrusions, required time to attain the desired humidity level is also reduced. Figure-11-A shows another layout to be applied to smaller drums (5) to configure (33) said drum surface, wherein a perforated metal sheet (9) is first undulated and then given the shape (33-a) of a drum (5) in such a way that drum perforations (8) which formed in different sizes and shapes look like all aforementioned examples, placed inside the hollows (46) and these small ribs (45-g) shall be formed homogenously over the entire surface. The drum disclosed in Figure-11-B may be fabricated partially or totally from a plastic material. When the perforated surface of a drum is made of a plastic material, the drum interior of the drum can be manufactured with a protrusive (45-h) surface (33-b) and the exterior with a cylindrical surface (49) as shown in Figure-11-B. Coating a perforated metal sheet totally with some large-pieced materials (31) might be applied easily in small washing machines, but in larger machines represented in Figure-12, a handy application by using of small ribs (45-i, j) on the perforated metal sheet in between the drum perforations (8) could be better solution. If stainless steel used, said ribs (45-i) can be fixed onto the drum or welded directly over the perforated sheet (9). In cleaning-purposed washing machines wherein water level is low, sufficient number of small ribs (45) can rotate washing material alone but will not be sufficient to rotate the entire floating material in machines wherein water level is higher. Normal size ribs (50) are also required in this case in addition to said small ribs (45), as can be observed in Figure-12-A. Sizes, shapes, and densities of protrusions (45) inside the drum must be provided to prevent any damages on the textile (48). Protrusions (45), employed in drums of industrial type stone washing machines, a washing process that literally uses abrasive material like pumice stones to wear out fabrics, not only increase the physical effect of "stone washing" on treated denim fabrics and accelerate a worn-out appearance thereof, but also prevent said stones to rub the perforated metal sheet (9) and contribute the lengthening of lifetime of said drum. (9). Stainless cutting-edge (45-j) protrusions are applied to a drum that performs stone-washing by means of either welding directly onto said drum or in an detachable way, as shown in Figure-12-B. Various shaped pieces, produced from plastic or rubber and comprise high resistance to abrade, may also be substituted to stainless material and mounted likewise onto said drum. Employing plastic pieces (51-a, b) in stone-washing drums, illustrated as example in Figure-9, augment physical effect and prevent at the same time the wearing out of drum sheet (9). In time, protrusions (51) which worn out under the abrasive effect of stones, can be replaced with new ones (51).

## Claims

1. A washing machine (1) comprising:
a liquid tub (10) positioned either horizontal or inclined with a horizontal where a perforated drum (5) rotates in the liquid tub around a shaft-bearing system (11); and a pump (16) provided to pump water from the liquid tub (10) into the drum (5) while a required level or amount of a liquid for washing or rinsing is provided in the drum (5) and it enables:
a) to decrease the level of a tub liquid, or
b) to keep the level of the tub liquid at a desired level, or
c) to evacuate the tub liquid completely,
when needed,
wherein the tub liquid that exists in a volume (39) between the drum (5) and the liquid tub (10) and that drains from the drum (5) into the liquid tub (10) is pumped from the liquid tub (10) into the drum (5) by said pump (16) for all washing processes conditions,
wherein the pump (16) has a higher flow-rate capacity than a drain rate of the liquid from the drum (5) into the tub (10) for all washing processes conditions,
wherein a permeability of the drum (5) is restrained to enable the pump (16)
d) to decrease the level of the tub liquid, or
e) to decrease and then keep the level of the tub liquid at a desired level, or
f) to evacuate the tub liquid in the volume (39) between the liquid tub (10) and the drum (5) completely for all washing processes conditions,
wherein the quantities and sizes of the drum perforations (21) are provided in such a way that the drain rate of the liquid from the perforations is less than the flow rate of the pump (16), which is used to pump the liquid back into the drum (5),
wherein the perforated (8) cylindrical surface (9) of the drum (5) is provided with a ribbed constitution in order to obtain a surface with protrusions (45) in various shapes and sizes in that the height of said protrusions (45) is less than 6 % of the diameter of said drum (5),
wherein said protrusions (45) are at adequate height and density to provide such that laundry that is lifted up and spread onto said protrusions (45) to hold laundry away from the cylindrical surface to create a gap under the laundry to increase permeability of the laundry and flowing of the water on the surface towards to perforations during washing.

2. The washing machine (1) according to claim 1, **characterized in that** an interior surface of the drum (5) is provided either with a protrusive construction or a coating with a protrusive material or through attaching pieces so as to obtain the protrusions over the cylindrical surface of the drum will increase physical effect on washed material and will increase water passage through perforation.

3. The washing machine (1) according to any one of the preceding claims, **characterized in that** the drum perforations (21) provided on the cylindrical surface (9) of the drum (5) are arranged in between or under the protrusions (45).

4. The washing machine (1) according to any one of the preceding claims, **characterized in that** the pump (16) is provided to be operated under a control mounted onto a circulation line (40) and the circulation line (40) is accessing into the drum (5) through the door (35).

5. The washing machine (1) according to claim 4, **characterized in that** the tub liquid is heated be means of a steam injector or a heat exchanger on the circulation line (40).

6. The washing machine (1) according to any one of the claims 4 or 5, **characterized in that** a spray nozzle (38-b) arranged on the circulation line (40) at the drum inlet can regulate the route of the incoming water, spraying water onto laundry (48) during washing and rinsing.

7. The washing machine (1) according to any one of the preceding claims, **characterized in that** the protrusions (45) are arranged over the entire interior surface of the drum (5) in the form of small ribs (45- a, b, d, e, g, h, i, j, k) which are plastic (45-a, b, e, k) or stainless steel (45-i, j, g).

8. The washing machine (1) according to any one of the preceding claims, **characterized in that** the small size protrusions (45) are placed over the surface of the drum (5) to hide the drum perforations (21) completely and to allow the flow of the liquid underneath a gap to reach the drum perforations.

9. The washing machine (1) according to any one of the preceding claims **characterized in that** a metal sheet which constitutes the cylindrical surface (9) of the drum (5) is undulated (33-a) with corrugated indents and protrusions (45-g).

10. The washing machine (1) according to any one of the preceding claims, **characterized in that** the protrusions (45) are provided on the cylindrical surface of the drum (5) either solely in lieu of normal size ribs (50) or in addition to conventional normal size ribs (50).

11. The washing machine (1) according to any one of the preceding claims, **characterized in that** the drum perforations (21) provided on the front and/or back cover sheet (47) of a drum are in the same level with the cylindrical surface.

## Patentansprüche

1. Waschmaschine (1), welche aufweist:
einen Flüssigkeitsbehälter (10), der entweder horizontal oder schräg zu einer Horizontalen angeordnet ist, wobei sich eine perforierte Trommel (5) in dem Flüssigkeitsbehälter um ein Wellenlagersystem (11) dreht; und eine Pumpe (16), die vorgesehen ist, um Wasser aus dem Flüssigkeitsbehälter (10) in die Trommel (5) zu pumpen, während ein erforderlicher Pegel oder eine erforderliche Menge einer Flüssigkeit zum Waschen oder Spülen in der Trommel (5) bereitgestellt wird, und die es ermöglicht:
a) den Pegel einer Wannenflüssigkeit zu senken, oder
b) den Pegel der Wannenflüssigkeit auf einem gewünschten Pegel zu halten,
oder
c) die Wannenflüssigkeit vollständig zu evakuieren, wenn es erforderlich ist,
wobei die Wannenflüssigkeit, die in einem Volumen (39) zwischen der Trommel (5) und dem Flüssigkeitsbehälter (10) vorhanden ist und die aus der Trommel (5) in den Flüssigkeitsbehälter (10) abläuft, durch die Pumpe (16) für alle Waschprozessbedingungen aus dem Flüssigkeitsbehälter (10) in die Trommel (5) gepumpt wird,
wobei die Pumpe (16) eine höhere Durchflusskapazität als eine Abflussrate der Flüssigkeit aus der Trommel (5) in den Flüssigkeitsbehälter (10) für alle Waschprozessbedingungen aufweist,
wobei eine Durchlässigkeit der Trommel (5) eingeschränkt ist, um der Pumpe (16) zu ermöglichen
d) den Pegel der Wannenflüssigkeit zu senken, oder
e) diesen zu senken und dann den Pegel der Wannenflüssigkeit auf einem gewünschten Niveau zu halten, oder
f) die Wannenflüssigkeit in dem Volumen (39) zwischen dem Flüssigkeitsbehälter (10) und der Trommel (5) unter allen Waschprozessbedingungen vollständig zu evakuieren,
wobei die Anzahlen und die Größen der Trommeldurchbrüche (21) auf eine solche Weise vorgesehen sind, dass die Abflussrate der Flüssigkeit aus den Durchbrüchen geringer ist als die Durchflussrate der Pumpe (16), mit der die Flüssigkeit zurück in die Trommel (5) gepumpt wird,
wobei die perforierte (8) zylindrische Oberfläche (9) der Trommel (5) mit einer gerippten Beschaffenheit versehen ist, um eine Oberfläche mit Vorsprüngen (45) in verschiedenen Formen und Größen zu erhalten, wobei die Höhe der Vorsprünge (45) weniger als 6 % des Durchmessers der Trommel (5) beträgt,
wobei die Vorsprünge (45) eine angemessene Höhe und Dichte aufweisen, um dafür zu sorgen, dass Wäsche, die hochgehoben und auf den Vorsprüngen (45) ausgebreitet wird, von der zylindrischen Oberfläche weggehalten wird, um einen Spalt unter der Wäsche zu schaffen, um die Durchlässigkeit der Wäsche und das Fließen des Wassers auf der Oberfläche zu den Perforationen während des Waschens zu erhöhen.

2. Waschmaschine (1) nach Anspruch 1, **dadurch gekennzeichnet, dass** eine innere Oberfläche der Trommel (5) entweder mit einer vorstehenden Konstruktion oder einer Beschichtung mit einem vorstehenden Material oder durch eine Anbringung von Teilen versehen ist, um die Vorsprünge über der zylindrischen Oberfläche der Trommel die physikalische Wirkung auf das gewaschene Material zu erhöhen und den Wasserdurchgang durch die Perforation zu verbessern.

3. Waschmaschine (1) nach einem der vorhergehenden Ansprüche, **dadurch gekennzeichnet, dass** die auf der zylindrischen Oberfläche (9) der Trommel (5) vorgesehenen Trommeldurchbrüche (21) zwischen oder unter den Vorsprüngen (45) angeordnet sind.

4. Waschmaschine (1) nach einem der vorhergehenden Ansprüche, **dadurch gekennzeichnet, dass** die Pumpe (16) zum Betrieb mit einer an einer Zirkulationsleitung (40) angebrachten Steuerung vorgesehen ist und dass die Zirkulationsleitung (40) durch die Tür (35) in die Trommel (5) eintritt.

5. Waschmaschine (1) nach Anspruch 4, **dadurch gekennzeichnet, dass** die Wannenflüssigkeit mittels eines Dampfinjektors oder eines Wärmetauschers an der Zirkulationsleitung (40) erhitzt wird.

6. Waschmaschine (1) nach einem der Ansprüche 4 oder 5, **dadurch gekennzeichnet, dass** eine an der Zirkulationsleitung (40) an dem Trommeleinlass angeordnete Sprühdüse (38-b) den Weg des einströmenden Wassers regulieren kann, indem sie während des Waschens und des Spülens Wasser auf die Wäsche (48) sprüht.

7. Waschmaschine (1) nach einem der vorhergehenden Ansprüche, **dadurch gekennzeichnet, dass** die Vorsprünge (45) über die gesamte innere Oberfläche der Trommel (5) in Form von kleinen Rippen (45-a, b, d, e, g, h, i, j, k) angeordnet sind, die aus Kunststoff (45-a, b, e, k) oder Edelstahl (45-i, j, g) bestehen.

8. Waschmaschine (1) nach einem der vorhergehenden Ansprüche, **dadurch gekennzeichnet, dass** die kleinen Vorsprünge (45) über der Oberfläche der Trommel (5) angeordnet sind, um die Trommeldurchbrüche (21) vollständig zu verdecken und um zu ermöglichen, dass die Flüssigkeit unter einem Spalt zu den Trommeldurchbrüchen fließt.

9. Waschmaschine (1) nach einem der vorhergehenden Ansprüche, **dadurch gekennzeichnet, dass** ein Metallblech, das die zylindrische Oberfläche (9) der Trommel (5) bildet, gewellt (33-a) und mit gewellten Vertiefungen und Vorsprüngen (45-g) versehen ist.

10. Waschmaschine (1) nach einem der vorhergehenden Ansprüche, **dadurch gekennzeichnet, dass** die Vorsprünge (45) auf der zylindrischen Oberfläche der Trommel (5) entweder nur anstelle von Rippen (50) normaler Größe oder zusätzlich zu herkömmlichen Rippen (50) normaler Größe vorgesehen sind.

11. Waschmaschine (1) nach einem der vorhergehenden Ansprüche, **dadurch gekennzeichnet, dass** die auf dem vorderen und/oder hinteren Deckblech (47) einer Trommel vorgesehenen Trommeldurchbrüche (21) in der gleichen Ebene wie die zylindrische Oberfläche liegen.

## Revendications

1. Machine à laver (1) comprenant :
une cuve à liquide (10) disposée soit horizontalement soit inclinée par rapport à l'horizontale, dans laquelle un tambour perforé (5) tourne dans la cuve à liquide autour d'un système support d'arbre (11) ; et une pompe (16) qui est prévue pour pomper l'eau de la cuve à liquide (10) dans le tambour (5) alors qu'un niveau ou une quantité requis/requise de liquide pour le lavage ou le rinçage est fourni/fournie dans le tambour (5) et qu'il permet :
a) de réduire le niveau de liquide de la cuve ou
b) de maintenir le niveau de liquide de la cuve à un niveau souhaité ou
c) d'évacuer complètement le liquide de la cuve
lorsque cela est nécessaire
dans laquelle le liquide de la cuve qui existe dans un volume (39) entre le tambour (5) et la cuve à liquide (10) et qui est drainé du tambour (5) dans la cuve à liquide (10) est pompé à partir de la cuve à liquide (10) dans le tambour (5) par ladite pompe (16) quelles que soient les conditions des processus de lavage,
dans laquelle la pompe (16) présente une capacité de débit supérieure à une capacité de vitesse de drainage de liquide à partir du tambour (5) dans la cuve (10), quelles que soient les conditions des processus de lavage,
dans laquelle une perméabilité du tambour (5) est limitée pour permettre à la pompe (16) :
d) de réduire le niveau du liquide de la cuve ou
e) de réduire puis maintenir le niveau du liquide de la cuve à un niveau souhaité ou
f) d'évacuer complètement le liquide de la cuve dans le volume (39) entre la cuve à liquide (10) et le tambour (5) quelles que soient les conditions des processus de lavage,
dans laquelle les quantités et les tailles des perforations (21) de tambour sont prévues de telle manière que la vitesse de drainage du liquide à partir des perforations est inférieure au débit de la pompe (16) qui est utilisée pour pomper le liquide en retour dans le tambour (5)
dans laquelle la surface cylindrique (9) perforée (8) du tambour (5) est pourvue d'une configuration nervurée afin d'obtenir une surface avec des saillies (45) de formes et de tailles diverses et dans laquelle la hauteur desdites saillies (45) est inférieure à 6 % du diamètre dudit tambour (5) ;
et dans laquelle lesdites saillies (45) ont und hauteur et une densité suffisante pour que le linge est soulevé et étalé sur lesdites saillies (45) afin de maintenir le linge à distance de la surface cylindrique afin de créer un espace sous le linge pour augmenter la perméabilité du linge et l'écoulement de l'eau sur la surface vers les perforations pendant le lavage.

2. Machine à laver (1) selon la revendication 1, **caractérisée en ce qu'**une surface intérieure du tambour (5) est pourvue soit d'une construction saillante, soit d'un revêtement avec une matière saillante, soit de pièces rattachées de manière à obtenir les saillies sur la surface cylindrique du tambour, ce qui va augmenter l'effet physique sur la matière lavée et ce qui va augmenter le passage de l'eau à travers la perforation.

3. Machine à laver (1) selon l'une quelconque des revendications précédentes, **caractérisée en ce que** les perforations du tambour (21) qui sont prévues sur la surface cylindrique (9) du tambour (5) sont disposées entre les saillies (45) ou sous les saillies (45).

4. Machine à laver (1) selon l'une quelconque des revendications précédentes, **caractérisée en ce que** la pompe (16) est pourvue de sorte à être actionnée par une commande qui est montée sur une conduite de circulation (40) et que la conduite de circulation (40) accède à l'intérieur du tambour (5) à travers la porte (35).

5. Machine à laver (1) selon la revendication 4, **caractérisée en ce que** le liquide de la cuve est chauffé au moyen d'une pompe à jet de vapeur ou d'un échangeur de chaleur sur la conduite de circulation (40).

6. Machine à laver (1) selon l'une quelconque des revendications 4 ou 5, **caractérisée en ce qu'**une buse de pulvérisation (38-b) qui est disposée sur la conduite de circulation (40) à l'entrée du tambour peut réguler le trajet de l'eau entrante, en pulvérisant de l'eau sur le linge (48) pendant le lavage et le rinçage.

7. Machine à laver (1) selon l'une quelconque des revendications précédentes, **caractérisé en ce que** les saillies (45) sont agencées sur la totalité de la surface intérieure du tambour (5) sous forme de petites nervures (45- a, b, d, e, g, h, i, j, k) qui sont en matière plastique (45-a, b, e, k) ou en acier inoxydable (45-i, j, g).

8. Machine à laver (1) selon l'une quelconque des revendications précédentes, **caractérisée en ce que** les saillies de petite taille (45) sont disposées sur la surface du tambour (5) pour masquer complètement les perforations du tambour (21) et pour permettre l'écoulement du liquide en-dessous un espace pour atteindre les perforations du tambour.

9. Machine à laver (1) selon l'une quelconque des revendications précédentes, **caractérisée en ce qu'**une tôle métallique qui constitue la surface cylindrique (9) du tambour (5) est ondulée (33-a) avec des indentations et des saillies ondulées (45-g).

10. Machine à laver (1) selon l'une quelconque des revendications précédentes, **caractérisée en ce que** les saillies (45) sont prévues sur la surface cylindrique du tambour (5) soit uniquement à la place des nervures de taille normale (50), soit en plus des nervures classiques de taille normale (50).

11. Machine à laver (1) selon l'une quelconque des revendications précédentes, **caractérisée en ce que** les perforations du tambour (21) qui sont prévues sur la tôle de couverture avant et/ou arrière (47) d'un tambour sont au même niveau que la surface cylindrique.
